Europäisches Patentamt

European Patent Office

Office européen des brevets

Publication number: **0 296 809**

**A2**

# EUROPEAN PATENT APPLICATION

(21) Application number: **88305657.4**

(22) Date of filing: **20.06.88**

(51) Int. Cl.⁴: **F16N 7/34 , F16N 19/00**

(30) Priority: **24.06.87 GB 8714788**

(43) Date of publication of application:
**28.12.88 Bulletin 88/52**

(84) Designated Contracting States:
**DE FR GB IT**

(71) Applicant: **PARKER HANNIFIN (UK) LIMITED**
**69-71 Clarendon Road**
**Watford WD1 1DQ(GB)**

(72) Inventor: **Martin, Keith Sydney**
**1 Hilcote Hollow**
**Stafford ST16 1UL Staffordshire(GB)**
Inventor: **Dyal, Anthony Sydney**
**36 Hollyhurst Road**
**Bannersgate Sutton Coldfield B73 6SY(GB)**

(74) Representative: **Purvis, William Michael**
**Cameron et al**
**D. Young & Co. 10 Staple Inn**
**London WC1V 7RD(GB)**

(54) Improvements relating to bowls for air filters and lubricators.

(57) A bowl (16) for an air filter or a lubricator of a compressed air system is formed by an inner member (17) moulded of a thin transparent generally unstressed plastics and an outer member (18) formed of an inert mechanically strong engineering plastics which mounts and supports the inner member (17) and has apertures therein so that the level of water or oil in the inner member (17) can be viewed.

FIG. 2.

## IMPROVEMENTS RELATING TO BOWLS FOR AIR FILTERS AND LUBRICATORS

The invention relates to bowls for air filters and lubricators.

When supplying compressed air it is frequently desirable to provide a filter arrangement and a lubricator so that machines to be driven by the compressed air are not contaminated and are suitably lubricated. In the usual arrangement a filter and a lubricator are provided in line with a pressure control arrangement and possibly a pressure gauge therebetween. Each of the filter and the lubricator is provided with a bowl, the filter bowl having a filter element suspended therein and in use containing water removed from the airstream and the bowl of the lubricator containing oil which is to be added to the airstream. It is desirable that the level of water in the filter bowl and the level of oil in the lubricator bowl be visually apparent so that the filter bowl can be drained when the level increases to a determined level and the lubricator bowl can be recharged when the oil level sinks to a determined level.

For may years compressed air filters and lubricators have used bowls or reservoirs made from clear plastic, the clear plastic giving good visibility of the liquid level within the bowls.

The clear plastic bowls have very good mechanical strength with burst pressures far exceeding the maximum working pressure (typically 10 bar). However, they can fail in service at much lower pressures due to stress cracking induced by exposure to certain chemicals. These chemicals are today widely used in industrial cleaners and solvents so the risk of failure is becoming more likely. With the growing concern of all parties with the health and safety of people at work, the safety of these devices is becoming more important.

It is possible to contain a plastics bowl within a metal outer guard and it has been proposed when high pressures are being used or in particularly difficult environments to use a metal bowl incorporating a sight glass. Both these embodiments, however, add considerably to the manufacturing cost.

Plastics are available which are not susceptible to attack by solvents and chemicals likely to be encountered but such plastics are not transparent.

According to the invention there is provided a bowl for a compressed air filter or a compressed air lubricator characterised by an inner member of a transparent plastics material formed by moulding so as to be relatively unstressed and an outer member moulded of an inert plastics material to support and contain the inner member, the outer member having at least one aperture therein so that the level of liquid in the inner member is readily visually apparent.

Thus the inner member can be moulded to a simple shape of an amorphous plastics material without undue stresses therein which would make it susceptible to stress cracking if exposed to industrial cleaners and solvents. Particularly it can be formed without a screwthread at the upper end which, were it not for the support provided by the outer member, would be required to secure it to the body of the air filter or lubricator. It can also be formed to a much smaller thickness than would be required were it not for the support provided by the outer member.

The outer member can be moulded of a mechanically strong crystalline engineering plastics.

Further advantages obtainable may comprise interchangeability with conventional plastics bowls, lower costs than plastics bowls provided with metal guards, only minor cost increase compared with standard transparent plastics bowls with safety equal to that of metal guarded bowls, no requirement for increase in overall dimensions and the considerable safety advantage over a plastics bowl provided with a metal guard that, since the outer member provides the mounting means for the inner member on the body of the filter or lubricator, it is not possible to fit the inner member without its outer member in the way that it is possible for a plastics bowl to be fitted without its metal guard.

The inner member may for example be formed of polycarbonate, polyamide or polyethylene terephthalate and the outer member of 30% glass filled nylon.

The invention is diagrammatically illustrated by way of example in the accompanying drawings in which:-

Figure 1 is an elevation of air preparation equipment of previously proposed kind comprising an air filter, a pressure regulator and an air lubricator;

Figure 2 is a sectional view through an air filter incorporating a bowl according to the invention;

Figure 3 is a sectional view of the bowl of Figure 2 but incorporating a modified drain system; and

Figure 4 is an elevation corresponding to Figure 3.

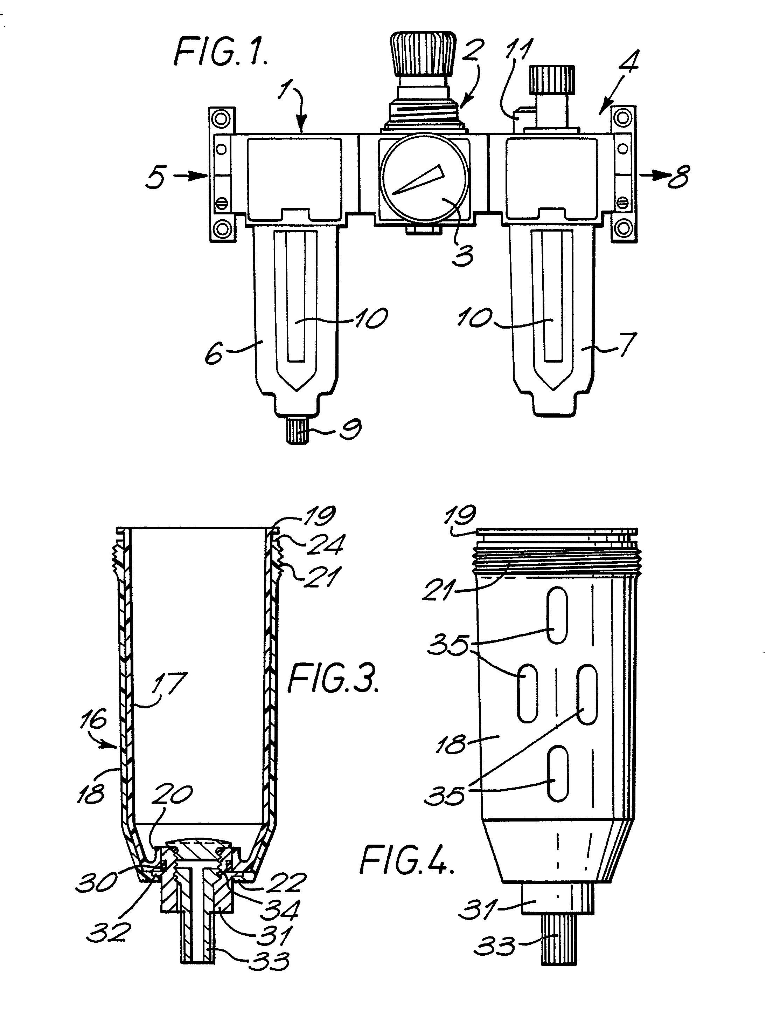

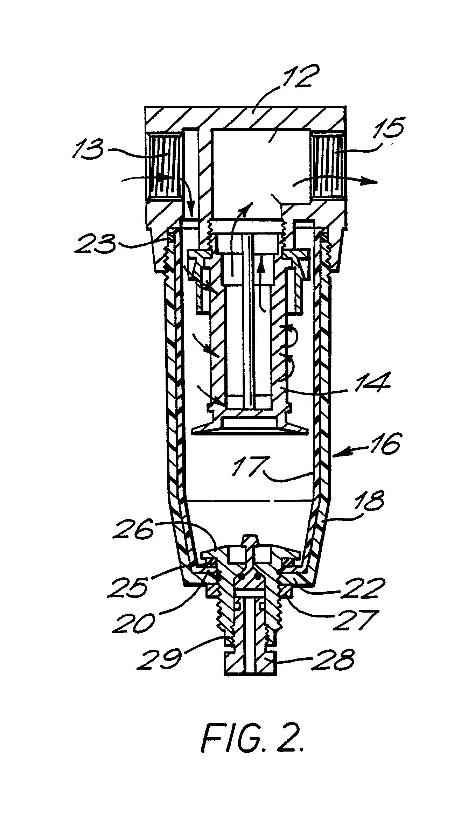

Referring to the drawings and firstly to Figure 1, air preparation equipment comprises an air filter 1, a pressure regulator 2 having an indicator gauge 3 and an air lubricator 4. Air is fed to the equipment as indicated by arrow 5, is filtered within a metal bowl 6 of the filter 1, the pressure is regulated by the air regulator 2 and oil contained in a metal bowl 7 of the lubricator 4 is added to the air before the air is fed out of the air preparation equipment as indicated by arrow 8. A drain 9 is provided for the bowl 6 so that water extracted from the air can be drained from the bowl 6. Each of the bowls 6 and 7 has a screwthread on its outer circumference at the upper end whereby it is screwed into the body of the respective filter 1 or lubricator 4. In addition each of the metal bowls 6, 7 has a sight glass 10 of clear plastics material provided with a dove-tail section and slidably engaged in a dove-tail section groove in the respective bowl 6, 7 and sealed therein. By means of the sight glasses 10 the level of water in the bowl 6 and the level of oil in the bowl 7 can readily be visually determined and the bowl 6 can be drained using the drain 9 or the bowl 7 can be re-charged with oil using re-charging means 11. The system shown in Figure 1 has proved highly satisfactory and has been manufactured in very large numbers. It is, however, expensive to manufacture particularly due to the operations of forming the bowls 6, 7 of metal with the dove-tail grooves therein and mounting and sealing the sight glasses 10 in the metal bowls 6, 7.

Referring to Figure 2 an air filter comprises a body 12 with an air inlet 13, a filter 14 and an air outlet 15. Air entering the inlet 13 passes as indicated by the arrows through the filter 14 and leaves through the outlet 15. Water contained in the air is, as the air swirls around the filter 14, thrown outwardly and collects in the lower part of a bowl 16 of the filter. The bowl 16 is formed by an inner member 17 of a thin transparent generally unstressed plastics and an outer member 18 formed of a mechanically strong inert engineering plastics.

The inner member 17 has a simple out-turned flange 19 at its upper end and a flange 20 around an aperture in its lower end. The outer member 18 is provided with a screwthread 21 at its upper end and at its lower end is provided a flange 22 around an aperture therein. An 0-ring 23 is provided between the flange 19 of the member 17 and the upper end 24 of the outer member 18 to provide a seal at the upper end of the bowl between the inner member 17, the outer member 18 and the body 12.

In the embodiment of drain arrangement shown in Figure 2, an O-ring 25 forms a seal with a body 26 which is screwed into the aperture in the flange 22 of the outer member 18 and secured by a locking nut 27. A central member 28 of the drain arrangement is screwed into the body 26 by a screwthread 29 and is loosenable on the screwthread 29 and can be lowered to allow water to drain out of the bowl 16.

In the drain arrangement of Figure 3 an O-ring 30 provides a seal between the flange 20 of the inner member 17, which flange 20 is up-turned, and a body 31 of the drain arrangement which has an outwardly directed flange 32 trapped between the lower end of the inner member 17 and the flange 22 of the outer member 18. An inner member 33 of the drain arrangement is screwthreaded by a screwthread 34 to the member 31 and can be loosened and raised to allow the water to drain from the bowl 16. Figure 4 shows that the outer member 18 has at least one aperture 35 therein, as shown four elongate apertures 35, through which the transparent inner member 17 can be viewed and consequently the level of liquid within the inner member 17 can be determined.

The arrangement of the O-ring 23 provides that sealing is effected on the outer curved surface of the inner member 17 and the inner curved surface of the body 12 rather than on the flat surfaces of the flange 19 and the end face 24, which flange 19 and end face 24 merely act to compress the O-ring 23 to enhance the seal on the curved surfaces.

## Claims

1. A bowl (16) for a compressed air filter or a compressed air lubricator characterised by an inner member (17) of a transparent plastics material formed by moulding so as to be relatively unstressed and an outer member (18) moulded of an inert plastics material to support and contain the inner member (17), the outer member (18) having at least one aperture therein so that the level of liquid in the inner member (17) is readily visually apparent.

2. A bowl according to claim 1 in which the inner member (17) is moulded to a simple shape of an amorphous plastics material without undue stresses therein.

3. A bowl according to claim 1 or claim 2, in which the inner member (17) is formed without a screwthread at the upper end.

4. A bowl according to any one of claims 1 to 3 in which the inner member (17) is formed of polycarbonate, polyamide or polyethylene terephthalate.

5. A bowl according to any one of claims 1 to 4 in which the outer member (18) is moulded of a mechanically strong crystalline engineering plastics.

6. A bowl according to any one of claims 1 to 5, in which the outer member (18) is formed of 30% glass filled nylon.

*FIG.1.*

1

2

11

4

5

8

3

10

10

6

7

9

19

24

21

19

21

17

*FIG.3.*

16

35

18

18

20

35

30

22

34

32

31

33

31

*FIG.4.*

31

33

FIG. 2.